# FASCICULE DE BREVET EUROPEEN

(11) **EP 0 435 822 B1**
(45) Date de publication et mention de la délivrance du brevet: **25.05.1994**
(21) Numéro de dépôt: 90810991.1
(22) Date de dépôt: 17.12.1990
(51) Int. Cl.: A23C 1/12, A23C 9/15, A23C 9/152

(54) **Procédé de préparation d'un produit laitier évaporé**
Verfahren zur Herstellung eines konzentrierten Milchprodukts
Process for preparing a concentrated milk product

(30) Priorité: 19.12.1989 EP 89123416
(43) Date de publication de la demande: 03.07.1991
(73) Titulaire: SOCIETE DES PRODUITS NESTLE S.A., 1800 Vevey (CH)
(72) Inventeur: Dalan, Ernesto, CH-1807 Blonay (CH); Henggeler, Markus André, CH-8165 Oberweningen (CH)

(56) Documents cités:
- BE-A- 571 931
- GB-A- 1 158 577
- US-A- 1 965 490
- US-A- 2 860 988
- US-A- 2 886 450
- US-A- 3 065 086
- MILCHWISSENSCHAFT vol. 41, no. 8, août 1986, MÜNICH, ALLEMAGNE pages 470 - 473; E.E.HARDY-LLOYD: "Preparation and properties of sterilized concentrated milk incorporating lecithin"

## Description

La présente invention concerne un procédé de préparation d'un produit laitier évaporé contenant de la matière grasse.

Le lait ou la crème évaporé est préparé à partir du lait entier ou de la crème par élimination d'une partie de l'eau qu'il ou elle contient. La concentration a pour effet de rapprocher les globules gras ce qui peut provoquer une remontée de la matière grasse durant l'entreposage. Enfin, le lait évaporé étant destiné à être conservé longtemps, doit être stérilisé. Lorsque la stérilisation est mise en oeuvre par un traitement thermique d'appertisation après conditionnement, par exemple dans des boîtes, il y a un risque accru de déstabilisation de la phase liquide par la chaleur du fait de la perturbation du système caséinate, phosphate de calcium consécutive à la concentration. A l'entreposage, le lait ainsi traité peut s'épaissir, puis gélifier. Une manière usuelle de pallier ce dernier inconvénient est d'ajouter des sels de stabilisation comme par exemple le phosphate disodique ou le citrate trisodique comme indiqué par exemple dans "Technologie du lait", R. Veisseyre, 1975, p.293-295. Cependant, ces additifs sont de plus en plus contestés par les législations alimentaires. Une alternative à la stérilisation par appertisation est le conditionnement aseptique du lait évaporé ayant été stérilisé en ligne, par exemple par ultra haute température ou haute température courte durée. Ce dernier procédé n'empêche pas une cristallisation préjudiciable du citrate de calcium, voire une gélification à l'entreposage.

US-A-2.886.450 décrit un procédé de préparation d'un produit laitier évaporé par préchauffage, concentration par évaporation, traitement thermique, puis homogénéisation du concentrat, redissolution avec de l'eau et enfin stérilisation par ultra haute température.

Le but de l'invention est de fournir un procédé de préparation d'un produit laitier évaporé exempt d'additifs nonlactiques, stable à l'entreposage et résistant à l'acidité du café.

L'invention concerne donc un procédé de préparation d'un produit laitier évaporé contenant de la matière grasse stable à l'entreposage et exempt d'additifs non-lactiques, dans lequel on traite thermiquement un produit laitier dont le rapport pondéral matière grasse:matière sèche non grasse est 0,1:1 à 1,2:1, on le concentre jusqu'à une teneur en matière sèche de 20 à 40% en poids puis on stérilise le concentrat.

Selon l'invention, le but assigné est atteint par le fait que l'on ajoute au produit laitier de départ ou au concentrat un babeurre doux, un babeurre de matière grasse lactique anhydre provenant de la fabrication de l'huile de beurre, une fraction de babeurre doux décaséinée et délactosée, une fraction de babeurre de matière grasse lactique anhydre délactosée, une fraction de petit-lait de fromage à pâte cuite enrichie en lipides polaires ou un mélange de telles fractions, on traite thermiquement le mélange avant de le concentrer et on traite thermiquement puis homogénéise le concentrat avant de le stériliser.

Pour mettre en oeuvre le procédé, on standardise le cas échéant le lait entier, c'est-à-dire qu'on ajuste les quantités pondérales respectives de matière grasse et de solides non gras aux valeurs désirées par addition selon les besoins, par exemple de lait écrémé, de crème ou d'huile de beurre (matière grasse lactique anhydre).

On ajoute ensuite un dérivé du lait tel qu'indiqué précédemment contenant la majeure partie des phospholipides du lait.

Une fraction déprotéinée, partiellement ou totalement délactosée et/ou débeurrée de babeurre peut être préparée par exemple par séparation de la caséine et ultrafiltration pour délactoser et par centrifugation pour en éliminer les lipides non-polaires.

Une fraction de petit-lait provenant de la fabrication des fromages à pâte cuite, par exemple de parmesan, peut être obtenue par séparations successives de la phase grasse par centrifugation de manière à recueillir les lipides polaires.

Les dérivés du lait précédents peuvent être séchés sous forme de poudre les cas échéant après concentration.

On ajoute de préférence un tel dérivé du lait sous forme d'une dispersion dans un milieu aqueux, par exemple produite par prémélange dans un moulin colloïdal. En variante, on peut l'ajouter au concentrat après l'évaporation et avant l'homogénéisation consécutive comme indiqué ci-après.

Un dérivé du lait précédent peut être ajouté en quantité telle qu'il en résulte selon sa teneur en phospholipides 0,1 à 1%, de préférence 0,15 à 0,35% en poids et particulièrement environ 0,20% en poids de phospholipides dans le lait évaporé final, avec par exemple environ 0,18% de phospholipides ajoutés et environ 0,07% de phospholipides présents naturellement dans le lait évaporé, avec par exemple 30% de matière solide et 10% de matière grasse.

Une fois cette addition opérée, on préchauffe le mélange à 50-100°C, puis on le traite thermiquement de manière à stabiliser les liaisons entre les protéines, de sorte qu'elles subsistent après la concentration. Ce traitement thermique peut avoir lieu par chauffage direct ou indirect dans tout appareil usuel permettant de maintenir le liquide à 80-150°C pendant 1 à 1200 s. Bien entendu la limite supérieure de la température correspond à la limite inférieure de la durée. On peut ainsi par exemple combiner un échangeur à plaques avec un tube d'attente et une vanne de contre-pression réglée, deux échangeurs à plaques reliés par un tube d'attente ou encore un échangeur à plaques associé à une vanne de contre-pression réglée et une cuve d'attente thermostatisée.

Après ce traitement thermique, on concentre le liquide par évaporation avec expansion dans un évaporateur à flot tombant à simple ou de préférence à multiple effet à une teneur en matière sèche de 20 à 40% et de préférence 24-35% en poids.

Une fois concentré, le liquide est homogénéisé, de préférence en un passage dans un homogénéisateur à deux étages à 75-175 bar pour le premier et environ 25 bar pour le second. Le but de cette homogénéisation est de désintégrer les grappes de globules gras qui se sont formées durant l'étape de concentration et de réduire la taille de ces globules gras.

Après l'homogénéisation, on peut procéder directement au traitement thermique du concentrat homogénéisé ou alors procéder à un entreposage intermédiaire. Dans le premier cas, on règle le cas échéant la teneur en matière sèche du concentrat à la valeur désirée pour le produit final, par exemple 24 à 33% en poids par addition d'eau. Dans le second cas, on refroidit le concentrat à 1-10°C et de préférence à 4-8°C, on règle sa teneur en matière sèche comme ci-dessus et on le laisse au repos pendant 1 à 24 h. On peut aussi procéder directement au second traitement thermique sans entreposage intermédiaire.

Le second traitement thermique peut s'effectuer comme indiqué ci-dessus pour le premier, c'est-à-dire par chauffage direct ou indirect à 50-150°C par injection de vapeur et, après un temps d'attente de 1-600 s, par expansion dans un vase, ce qui produit un refroidissement à 50 -100°C. Durant ce second traitement thermique, on stabilise les protéines liées par dénaturation partielle. Les liaisons ainsi renforcées sont suffisamment solides pour que les protéines ne puissent plus coaguler durant la stérilisation ultérieure.

On procède alors à une homogénéisation dans des conditions semblables à l'homogénéisation indiquée précédemment et dans le même but, à savoir de désintégrer les grappes de globules gras formées. On refroidit ensuite l'homogénéisat à 0-20°C, de préférence à 4-8°C et on ajuste le cas échéant sa teneur en matière sèche à la valeur désirée du produit final par addition d'eau.

On procède enfin à la stérilisation du produit laitier, le cas échéant après un entreposage intermédiaire. Selon un premier mode de mise en oeuvre de cette stérilisation, on le conditionne dans des récipients, par exemple des boîtes métalliques, bouteilles en verre ou en matière plastique résistant à la chaleur, que l'on scelle hermétiquement, puis on traite les récipients dans un stérilisateur à 95-135°C pendant 30 s à 60 min., la limite supérieure de température correspondant à la durée la plus faible en une seule étape ou par palliers progressifs de température.

Dans une variante de la stérilisation, on effectue une stérilisation en ligne suivie d'un remplissage aseptique. Pour ce faire, on préchauffe le concentrat à 50-90°C, on le stérilise en ligne par chauffage indirect ou direct, par exemple à 105-150°C pendant 2 s à 1 h., la limite supérieure de la température correspondant à la limite inférieure de la durée, et de préférence par haute température courte durée ou ultra haute température. On refroidit ensuite le produit laitier à 50-90°C, le cas échéant par expansion, puis on l'homogénéise, en un ou plusieurs passages et un ou deux étages, à 50-300 bar, de préférence en un passage d'abord à 200-250 bar au premier étage, puis environ 50 bar au second étage. On le refroidit enfin à 4-30°C, de préférence à environ 20°C et on le conditionne dans des emballages, par exemple des boîtes métalliques ou des briques en carton. Les opérations suivant la stérilisation s'opèrent naturellement de manière aseptique.

Le produit laitier préparé selon l'invention est stable à l'entreposage de la même manière que les produits courants contenant des sels de stabilisation. De plus il est stérilisable sans ces derniers additifs qui étaient jugés indispensables jusqu'à présent pour éviter la gélification et/ou la coagulation durant la stérilisation. De plus, il résiste parfaitement bien à l'acidité d'un extrait aqueux de café chaud sans produire de floculation lorsqu'on l'ajoute à un tel extrait.

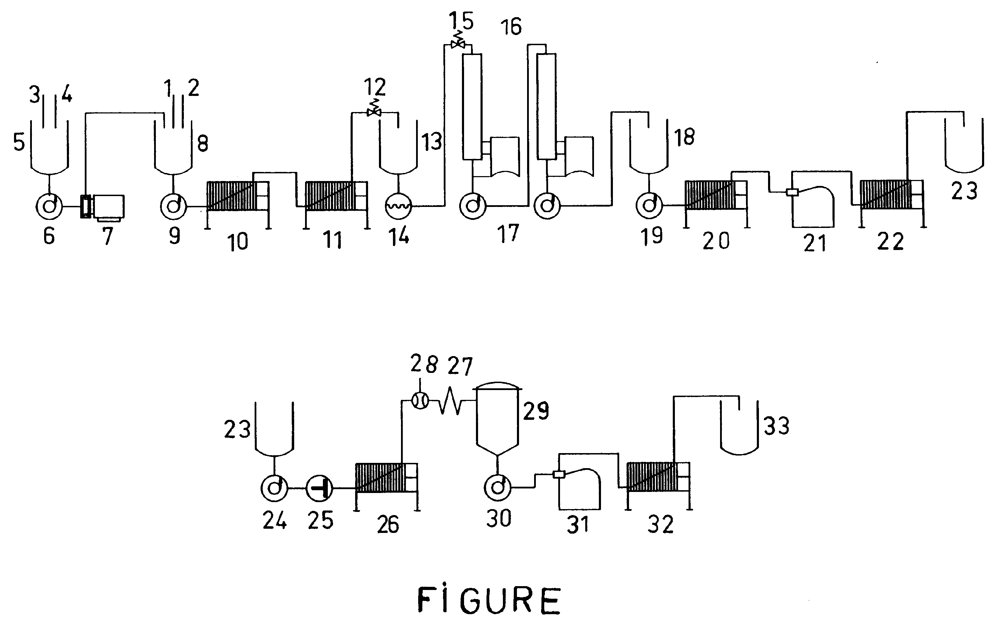

Les exemples ci-après illustrent l'invention à l'aide du dessin annexé. Dans ces exemples, les parties et pourcentages sont pondéraux, sauf indication contraire.

Au dessin, la figure est un schéma d'un mode de réalisation du procédé de l'invention.

Dans les exemples 1 à 5, on détermine le contenu en phospholipides du lait de l'émulsifiant par analyse du phosphore dans la matière grasse selon R.Walstra et coll., Neth. Milk & Dairy J. 16 (1962).

### Exemple 1

Dans cet exemple, le procédé est décrit en référence à la figure. On mélange 228,86 kg de lait entier cru (1) à 4% de matière grasse et 9% de solides non-gras du lait, 0,39 kg de crème (2) à 36% de matière grasse et 5,7% de solides non-gras du lait et une dispersion à 10% de 4,72 kg de poudre de babeurre du commerce (3) contenant 14,72% de matière grasse, 82,35% de solides non-gras du lait et 3,81% de lécithine de lait (phospholipides du lait déterminés par analyse du phosphore dans la matière grasse) dans de l'eau (4). La dispersion est préparée par prémélange dans la cuve (5), reprise par la pompe centrifuge (6) et passée au moulin colloïdal (7) avant d'être mélangée au lait et à la crème dans la cuve (8). La pompe centrifuge (9) dirige ensuite le mélange vers les échangeurs à plaques (10) et (11) qui le portent à 118°C. Le mélange est alors refroidi par détente à 96°C à l'aide de la vanne réglée (12), puis maintenu à cette température pendant 8 min dans la cuve (13). La pompe à pistons rotatifs (14) le dirige ensuite via la vanne réglée (15) vers l'évaporateur à flot tombant à double effet (16) où il est concentré à 35% de matière sèche par expansion sous vide. Il est alors repris par les pompes (17) dans la cuve tampon (18) et de là par la pompe centrifuge (19) vers l'échangeur à plaques (20) où il est réchauffé à 70-75°C. Il passe ensuite à travers l'homogénéisateur (21) où il est homogénéisé en deux étages, d'abord à 100 bar puis à 25 bar, refroidi dans l'échangeur à plaques (22) à 4°C et laissé au repos dans la cuve tampon (23) à cette température pendant 12 h. Durant cette période on ajuste la quantité de matière sèche à 33% par addition d'eau. On reprend ensuite le concentrat par la pompe centrifuge (24), puis la pompe à pistons (25) le fait passer à travers l'échangeur à plaques (26) où il est préchauffé à 80°C, puis dans le tube (27) où il est porté à 145-150°C par injection directe de vapeur en (28) et où il est maintenu à cette température pendant 3 s. et enfin vers un vase d'expansion (29) où sa température chute à 78°C. Au bas du vase d'expansion la pompe centrifuge (30) reprend le concentrat et le dirige vers l'homogénéisateur (31) où il est homogénéisé en deux étages, d'abord à 100 bar, puis à 25 bar, puis dans l'échangeur à plaques (32) où il est refroidi à 4°C et enfin vers la cuve (33) en attente de remplissage.

On obtient 100 kg de lait évaporé contenant 10% de matière grasse lactique et 23% de solides non gras du lait. Après dosage dans des boîtes et sertissages des boîtes, on stérilise le produit en deux étapes, d'abord à 95°C pendant 15 min, puis à 118°C pendant 12 min ( opérations non représentées). Le produit a la même stabilité à l'entreposage à température ambiante qu'un lait évaporé stabilisé avec sels de phosphate.

### Exemple 2

On procède comme à l'exemple 1 sauf que l'on ajoute la lécithine de lait dans la cuve (18) (Figure ) après la concentration par évaporation.

### Exemple 3

On procède comme à l'exemple 1, sauf que l'on met en oeuvre une poudre de babeurre enrichie en phospholipides du lait, fournissant 0,18% de phospholipides du lait, basé sur le lait évaporé final.

Pour la préparer, on centrifuge du beurre fondu sur un séparateur à bol ouvrant et on recueille la phase aqueuse constituée de babeurre de matière grasse lactique anhydre contenant 15,23% de matière sèche dont 7,63% de matière grasse et 3,85% de lactose, de pH 6,65. On pasteurise la phase aqueuse précédente à 73°C pendant 15 s dans un échangeur à surface râclée, puis on la refroidit à 50°C à l'aide de cet échangeur. On l'ultrafiltre ensuite dans un module d'ultrafiltration de 9m² dont les membranes ont une zone de coupure de 20000 daltons. On recueille le rétentat et on le sèche par pulvérisation dans une tour de séchage. La poudre contient 14% de phospholipides de lait (mesuré par analyse du phosphore dans la matière grasse).

### Exemple 4

On procède comme à l'exemple 1, sauf que l'on met en oeuvre une poudre de babeurre enrichie en phospholipides du lait, fournissant 0,18% de phospholipides du lait, basé sur le lait évaporé final.

Pour la préparer, on met en oeuvre un babeurre doux écrémé contenant 7% de matière sèche et 0,8% de matière grasse et 3,3% de lactose, de pH 6,81. On le pasteurise à 75°C pendant 15 s dans un échangeur à plaques puis on le refroidit à 40°C dans un échangeur à plaques et on l'acidifie jusqu'à pH 4,6 avec une solution à 20% d'acide citrique, de manière à précipiter la caséine. On sépare la caséine dans une centrifugeuse et on recueille un sérum à 5,58% de matière sèche. Après neutralisation à pH 6,7 avec une solution aqueuse de soude 1N, on pasteurise le sérum à 80°C pendant 15 s dans un échangeur à surface râclée puis on le refroidit à 50°C à l'aide de cet échangeur. On l'ultrafiltre ensuite dans un module d'ultrafiltration de 9 m² dont les membranes ont une zone de coupure de 20000 daltons et on recueille le rétentat, on le concentre à 28-32% de matière sèche dans un évaporateur à double effet et on le sèche par pulvérisation dans une tour de séchage. La poudre contient 14% de phospholipides de lait (mesuré par analyse du phosphore dans la matière grasse).

### Exemple 5

En procédant comme à l'exemple 1, on utilise un émulsifiant lactique naturel provenant de la fabrication des fromages à pâte cuite fournissant 0,18% de phospholipides du lait basé sur le lait évaporé final. Par centrifugation de petit-lait provenant de la fabrication de parmesan à 2000 t/min. à 50°C, on recueille une phase grasse. Au moyen d'un échangeur à surface râclée, on élève la température de la phase grasse à 75°C, puis on la traite en deux passages dans un décanteur centrifuge. On réunit les phases aqueuses de pH 4,4-4,6 en une seule dont on ajuste le pH à 6,1 par addition d'une solution aqueuse de soude 1N, puis on la pasteurise à 95°C pendant 5 s dans un échangeur à surface râclée, on la concentre à 18-20% de matière sèche dans un évaporateur à flot tombant et enfin on la sèche par pulvérisation dans une tour. La poudre obtenue contient 5% de phospholipides du lait (mesuré par analyse du phosphore dans la matière grasse).

## Revendications

1. Procédé de préparation d'un produit laitier évaporé contenant la matière grasse stable à l'entreposage et exempt d'additifs non-lactiques, dans lequel on traite thermiquement un produit laitier dont le rapport pondéral matière grasse : matière sèche non grasse est 0,1:1 à 1,2:1, on le concentre par évaporation jusqu'à une teneur en matière sèche de 20 à 40% en poids puis on stérilise le concentrat, caractérisé par le fait que l'on ajoute au produit laitier de départ ou au concentrat, un babeurre doux, un babeurre de matière grasse lactique anhydre provenant de la fabrication de l'huile de beurre, une fraction de babeurre doux décaséinée et délactosée, une fraction de babeurre de matière grasse lactique anhydre délactosée, une fraction de petit-lait de fromage à pâte cuite enrichie en lipides polaires ou un mélange de telles fractions, on traite thermiquement le mélange avant de le concentrer et l'on traite thermiquement puis homogénéise le concentrat avant de le stériliser et que le produit laitier évaporé final contient 0,1 à 1% en poids de phospholipides du lait.

2. Procédé selon la revendication 1, caractérisé par le fait que l'adjonction corresponde à 0,15 à 0,35% en poids de phospholipides du lait dans le produit laitier évaporé.

3. Procédé selon la revendication 1, caractérisé par le fait que l'on remplit des récipients avec le produit laitier évaporé, que l'on scelle hermétiquement les récipients et qu'on les stérilise.

4. Procédé selon la revendication 1, caractérisé par le fait que l'on stérilise le produit laitier évaporé en ligne à haute température, courte durée ou à ultra haute température, que l'on homogénéise, que l'on refroidit et que l'on conditionne le produit laitier stérilisé aseptiquement .

5. Produit laitier évaporé susceptible d'être obtenu par la mise en oeuvre du procédé selon l'une des revendications 1 à 4.

## Claims

1. A process for the production of an evaporated milk product containing fats which is stable in storage and free from non-lactic additives, in which a milk product having a ratio by weight of of fats to non-fat dry matter of 0.1:1 to 1.2:1 is heat-treated, concentrated by evaporation to a dry matter content of 20 to 40% by weight and the concentrate is sterilized, characterized by the fact that one adds to the starting material or to the concentrate a sweet buttermilk, a buttermilk of anhydrous lactic fats from the production of butter oil, a fraction of butter milk of anhydrous lactic fats freed from lactose, a whey fraction from cooked curd cheese enriched with polar lipids or a mixture of said fractions, one thermally treats the mixture before concentrating it and one thermally treats and then homogenize the concentrate before it is sterilized and that the final evaporated milk product contains from 0.1 to 1% by weight milk phospholipids.

2. A process as claimed in claim 1, characterized in that the addition corresponds to 0.15 to 0.35% by weight milk phospholipids in the evaporated milk product.

3. A process as claimed in claim 1, characterized in that containers are filled with the evaporated milk product, hermetically sealed and sterilized.

4. A process as claimed in claim 1, characterized in that the evaporated milk product is sterilized on-line at high temperature short time or at ultra-high temperature, homogenized, cooled and the strerilized product is aseptically packed.

5. An evaporated milk product susceptible of being obtained by the process according to anyone of claims 1 to 4.

## Patentansprüche

1. Verfahren zur Herstellung eines konzentrierten Milchprodukts, das lagerungsstabiles Fett enthält und frei von Nichtmilchzusätzen ist, bei welchem ein Milchprodukt, bei dem das Gewichtsverhältnis von Fett zu Nichtfett-Trockensubstanz 0,1 : 1 bis 1,2 : 1 beträgt, wärmebehandelt wird, durch Eindampfen auf einen Trockensubstanzgehalt von 25 bis 40 Gew.-% konzentriert wird und das Konzentrat sterilisiert wird, **dadurch gekennzeichnet,** daß man dem Ausgangsmilchprodukt oder dem Konzentrat eine Süßrahmbuttermilch, eine Buttermilch eines wasserfreien Milchfetts aus der Herstellung von Butteröl, eine entcaseinierte und von Lactose befreite Fraktion einer Süßrahmbuttermilch, eine von Lactose befreite Fraktion einer Buttermilch eines wasserfreien Milchfetts, eine mit polaren Lipiden angereicherte Fraktion einer Molke einer nachgewärmten Käsemasse oder eine Mischung dieser Fraktionen beigibt, daß man die Mischung vor dem Konzentrieren wärmebehandelt und daß man das Konzentrat vor dem Sterilisieren wärmebehandelt und homogenisiert, und daß das fertige konzentrierte Milchprodukt 0,1 bis 1 Gew.-% Milchphospholipide enthält.

2. Verfahren nach Anspruch 1, **dadurch gekennzeichnet**, daß die Zugabe einer Menge von 0,15 bis 0,35 Gew.-% Milchphospholipiden im konzentrierten Milchprodukt entspricht.

3. Verfahren nach Anspruch 1, **dadurch gekennzeichnet,** daß man Behälter mit dem konzentrierten Milchprodukt füllt, diese Behälter hermetisch verschließt und sterilisiert.

4. Verfahren nach Anspruch 1, **dadurch gekennzeichnet**, daß man das konzentrierte Milchprodukt auf der Produktionsstraße einer kurzzeitigen Hochtemperatursterilisierung oder einer Ultrahochtemperatursterilisierung unterwirft, homogenisiert und kühlt, und das sterilisierte Milchprodukt aseptisch verpackt.

5. Konzentriertes Milchprodukt, erhältlich nach einem Verfahren nach einem der Ansprüche 1 bis 4.
